# DEMANDE DE BREVET EUROPEEN

(11) **EP 3 693 242 A1**
(43) Date de publication de la demande: **12.08.2020**
(21) Numéro de dépôt: 19216868.0
(22) Date de dépôt: 17.12.2019
(51) Int. Cl.: B60W 30/14, B60W 30/16

(54) **PROCÉDÉ ET DISPOSITIF DE GESTION D'UN SYSTÈME D'AIDE À LA CONDUITE D'UN VÉHICULE ÉQUIPÉ D'UNE BOÎTE DE VITESSE MANUELLE**

(30) Priorité: 18.12.2018 FR 1873183
(71) Demandeur: RENAULT s.a.s., 92100 Boulogne-Billancourt (FR)
(72) Inventeur: DEBORNE, Renaud, 78150 LE CHESNAY (FR); GUEYE, Abdou-Salam, 91120 Palaiseau (FR); MARTIN, Philippe, 75012 Paris (FR)

(57) **Abrégé**

L'invention concerne un dispositif de gestion d'un régulateur adaptatif de vitesse et/ou de distance d'un véhicule automobile à boîte de vitesse manuelle, comprenant un module de supervision (10) pour contrôler l'activation d'une régulation en fonction d'une consigne de couple moteur (couple_ACC), un module de détection (20) pour fournir un signal de détection de changement de rapport (Gear_Shift) et un module de gestion d'estompage (30) de couple adapté pour, dès que ledit signal de détection indique un changement de rapport, commander une réduction progressive du couple moteur jusqu'à une valeur minimale (C_Min) à laquelle le couple est maintenu pendant le changement de rapport et, dès que ledit signal de détection indique la fin du changement de rapport, commander une augmentation progressive du couple moteur de façon à le recaler sur ladite consigne de couple, ledit module de supervision étant configuré pour maintenir l'activation de ladite régulation pendant ledit changement de rapport.

## Description

L'invention a pour objet un procédé et un dispositif de gestion d'un système d'aide à la conduite d'un véhicule équipé d'une boîte de vitesse manuelle.

Il est connu dans l'état de la technique d'utiliser un régulateur adaptatif de vitesse et/ou de distance (ACC - « Adaptive Cruise Control). Il s'agit d'un dispositif embarqué conçu pour maintenir une distance de sécurité avec le véhicule qui précède ou une vitesse prédéfinie tant qu'aucun véhicule lent ne vient se placer devant le véhicule. Ainsi, une fois qu'une vitesse a été sélectionnée, le conducteur peut relâcher la pédale d'accélérateur et la vitesse sélectionnée est maintenue. La vitesse du véhicule peut s'ajuster automatiquement jusqu'à ce que la distance de sécurité avec le véhicule qui précède corresponde au réglage de la distance de sécurité. Le véhicule maintient alors une distance constante par rapport au véhicule suivi jusqu'à ce que ce dernier adopte une vitesse supérieure à la vitesse sélectionnée ou sorte de la voie de circulation, auquel cas la vitesse du véhicule revient à la vitesse sélectionnée. La supervision classique du régulateur adaptatif de vitesse permet de déconnecter le régulateur, par exemple par une action du conducteur sur la pédale de freinage.

Sur un régulateur adaptatif de vitesse d'un véhicule équipé d'une boîte de vitesse manuelle, la décision prise par le conducteur d'effectuer un changement de rapport alors que le régulateur est activé, entraîne souvent la désactivation totale ou partielle de celui-ci. En effet, sur un véhicule équipé d'une boîte de vitesse manuelle, lorsque le rapport engagé n'est pas adapté à la vitesse du véhicule, il est de la responsabilité du conducteur d'adapter le rapport pour éviter que le moteur cale ou soit en sous ou en surrégime. Toutefois, l'appui sur la pédale d'embrayage déconnectant la liaison mécanique du moteur aux roues, la transmission d'effort est interrompue, ce qui empêche la régulation de vitesse. C'est pour cette raison que le régulateur est partiellement, voire totalement désactivé lors d'un changement de rapport. Cette déconnexion du régulateur de vitesse adaptatif entraîne donc une impossibilité de maintenir la régulation de vitesse et/ou de distance, associée à une incapacité d'assurer le freinage automatique dans certains cas, en particulier lorsqu'un un radar de régulation de distance est embarqué sur le véhicule et qu'il détecte un obstacle proche ou bien si une décélération est nécessaire pour suivre la vitesse de consigne voulue par le conducteur.

L'état de la technique fait connaître différentes solutions de gestion d'un régulateur adaptatif de vitesse pour des véhicules équipés d'une boîte de vitesse manuelle. Cependant, comme on va le voir, aucune n'est entièrement satisfaisante.

Le document US5680309 décrit le principe d'une suspension de la régulation de vitesse lors de la détection d'un changement de rapport et de reprise automatique après le changement de rapport. Comme on l'a dit plus haut, la déconnexion de la régulation de vitesse lors du changement de rapport n'est pas souhaitable, notamment car elle empêche d'assurer la fonction de freinage automatique dans certains cas en fonction des données radar recueillies, si le véhicule est équipé d'un tel radar.

Le document US20060106519 décrit un procédé de régulation de vitesse pour un véhicule équipé d'une boîte de vitesse manuelle, qui est basé sur un calcul de la probabilité que le conducteur sélectionne le rapport immédiatement supérieur si le conducteur actionne l'embrayage pendant la régulation de vitesse en cours. Durant le changement de rapport, la régulation de vitesse est partiellement suspendue et une valeur du régime moteur est calculée en fonction de la probabilité de passage au rapport supérieur afin de réduire les à-coups. Dès lors que la probabilité calculée est proche de 1, l'anticipation qui en découle sur l'adaptation du couple et régime moteur permet effectivement de réduire efficacement les à-coups du moteur, c'est-à-dire les modifications brusques du régime moteur. Toutefois, cette stratégie s'avère peu efficace lorsque le calcul de la probabilité fournit une valeur faible.

Toujours dans le contexte d'un véhicule équipé d'une boîte de vitesse manuelle, on peut encore citer le document FR3000931, qui décrit un procédé de régulation adaptative de la vitesse dans lequel la vitesse réelle du véhicule est régulée automatiquement sur une vitesse de consigne prédéfinie et est également adaptée de façon à respecter un intervalle de consigne par rapport à un véhicule qui précède et, dans le cas d'un changement de rapport de vitesse du véhicule, il est prévu de modifier automatiquement la vitesse de consigne et l'intervalle de consigne, de façon à les adapter au nouveau rapport. Cette régulation permet donc d'adapter automatiquement la vitesse de consigne à chaque changement de rapport, mais ne permet pas de maintenir la régulation lors des changements de rapport, ce qui peut être générateur d'à-coups ou d'envolées de régime lors du passage des rapports, au détriment de l'expérience de conduite.

Aussi, il existe un besoin pour un procédé de gestion d'un régulateur adaptatif de vitesse et/ou de distance équipant un véhicule automobile pourvu d'une boîte de vitesse manuelle, qui soit exempt des limitations précédentes et, en particulier, qui permette de limiter au maximum les à-coups du moteur lors des changements de rapports de vitesse.

A cette fin, l'invention concerne un procédé de gestion d'un régulateur adaptatif de vitesse et/ou de distance équipant un véhicule automobile à boîte de vitesse manuelle, dans lequel on active une régulation de vitesse et/ou de distance en fonction d'au moins une consigne de couple moteur, caractérisé en ce que, en réaction à une détection d'un début de changement de rapport de vitesse, il comprend les étapes de :
- maintenir activée ladite régulation de vitesse et/ou de distance,
- commander une réduction progressive du couple moteur jusqu'à une valeur minimale de couple sur laquelle le couple moteur est fixé pendant le changement de rapport et, dès que la fin du changement de rapport est détectée,
- commander une augmentation progressive du couple moteur de façon à recaler le couple moteur sur ladite consigne de couple moteur maintenue par la régulation.

Grâce à cette combinaison d'étapes de maintien de la régulation et d'adaptation progressive du couple moteur pendant le changement de rapport, le procédé de l'invention permet d'avoir une régulation plus souple et de réduire les à-coups lors des passages de rapport.

Le couple moteur peut être réduit progressivement selon une première rampe calibrable.

Le couple moteur peut être augmenté progressivement selon une deuxième rampe calibrable.

Le procédé peut comprendre une étape de calcul par la régulation d'une nouvelle consigne de couple moteur pendant le changement de rapport, le recalage du couple moteur étant effectué sur cette nouvelle consigne à la fin du changement de rapport.

Avantageusement, le procédé peut comprendre, pendant le changement de rapport, des étapes de réception de données capteur issues d'un système de régulation de distance embarqué sur le véhicule, de calcul d'une requête de freinage imposée par ladite régulation en fonction desdites données reçues et de transmission de ladite requête de freinage à un système de freinage du véhicule.

De préférence, l'étape de détection du début d'un changement de rapport peut comporter un lancement de temporisation et on commande la désactivation de ladite régulation lorsque la durée du changement de rapport est supérieure à un seuil de temporisation prédéterminé.

Avantageusement, le procédé peut comprendre la réception d'une valeur courante d'enfoncement de la pédale d'embrayage, la détection du début de changement de rapport étant fonction de la valeur courante d'enfoncement de la pédale d'embrayage et d'une valeur de seuil prédéterminée pour l'enfoncement de la pédale d'embrayage.

L'invention concerne également un dispositif de gestion d'un régulateur adaptatif de vitesse et/ou de distance d'un véhicule automobile à boîte de vitesse manuelle, comprenant un module de supervision dudit régulateur adapté à contrôler l'activation d'une régulation de vitesse et/ou de distance du véhicule en fonction d'au moins une consigne de couple moteur, caractérisé en ce qu'il comprend un module de détection d'un changement de rapport de vitesse apte à fournir un signal de détection de changement de rapport et un module de gestion d'estompage de couple configuré pour recevoir ledit signal de détection et, dès que ledit signal de détection passe à un état représentatif de la détection d'un début de changement de rapport de vitesse, pour commander une réduction progressive du couple moteur jusqu'à une valeur minimale de couple sur laquelle le couple moteur est fixé pendant le changement de rapport et, dès que ledit signal de détection passe à un état représentatif de la détection de la fin du changement de rapport de vitesse, pour commander une augmentation progressive du couple moteur de façon à recaler le couple moteur sur ladite consigne de couple moteur maintenue par la régulation, ledit module de supervision étant configuré pour maintenir l'activation de ladite régulation pendant ledit changement de rapport.

De préférence, le dispositif peut comprendre un module de gestion de la déconnexion du régulateur, configuré pour lancer une temporisation en réaction à la détection du début de changement de rapport et transmettre un signal de déconnexion du régulateur au module de supervision pour commander la désactivation de ladite régulation lorsque la durée du changement de rapport est supérieure à un seuil de temporisation prédéterminé.

L'invention concerne encore un véhicule automobile à boîte de vitesse manuelle comprenant un régulateur adaptatif de vitesse et/ou de distance, caractérisé en ce qu'il comprend un dispositif de gestion du régulateur tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
La figure 1 est un schéma synoptique illustrant une vue globale d'un mode de réalisation du dispositif selon l'invention de gestion de la non déconnexion d'un régulateur adaptatif de vitesse d'un véhicule automobile à boîte manuelle lors des changements de rapport de vitesse ;
La figure 2 est un chronogramme illustrant les signaux d'un capteur de position de la pédale d'embrayage, de couple moteur et d'un module de détection de changement de rapport mis en oeuvre dans le dispositif de l'invention ;
La figure 3 est un schéma synoptique illustrant le principe du maintien de la régulation lors des changements de rapport ;
La figure 4 est un organigramme représentant des étapes d'un procédé conforme à l'invention, de gestion de la non déconnexion d'un régulateur adaptatif de vitesse d'un véhicule automobile à boîte manuelle lors des changements de rapport, avec estompage de couple ;
La figure 5 est un organigramme représentant une variante des étapes du procédé de l'invention, illustrant la possibilité d'envoyer des requêtes de freinage pendant les changements de rapport.

Dans la suite de la description, l'expression « changement de rapport » désigne de façon générale toute phase de fonctionnement du moteur où ce dernier est déconnecté de sa transmission, que ce soit la conséquence d'un débrayage, autrement dit d'un appui sur la pédale d'embrayage, avec ou sans rapport de vitesse sélectionné, ou au point mort, correspondant à une position neutre du levier de vitesse, autrement dit une situation où aucune vitesse n'est sélectionnée tandis que la pédale d'embrayage est en position haute. Le changement de rapport concerne un changement de rapport montant comme descendant et couvre tous les changements de rapport depuis le deuxième rapport jusqu'au rapport maximum disponible, quel que soit le saut de rapport effectué (par exemple, du deuxième rapport vers le quatrième rapport, du cinquième rapport vers le deuxième rapport, etc.).

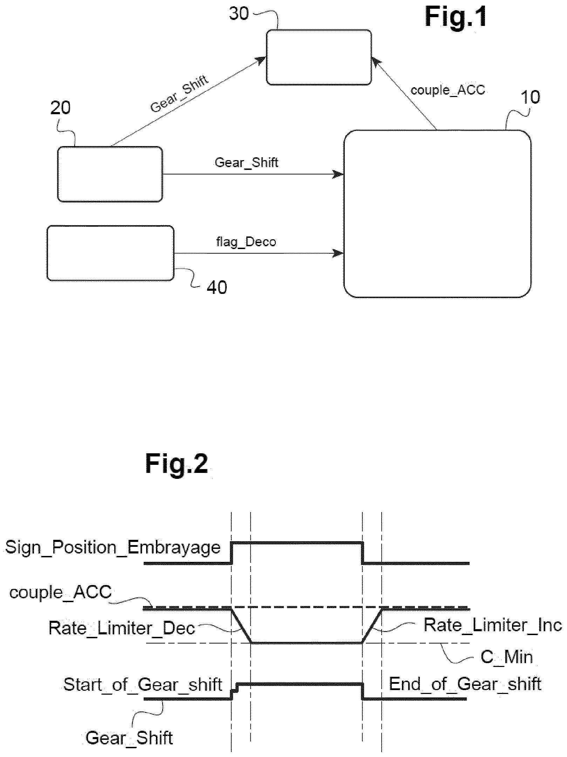

La figure 1 illustre les interactions entre les différentes fonctions du dispositif de gestion de la non déconnexion d'un régulateur adaptatif de vitesse d'un véhicule à boîte de vitesse manuelle lors des changements, montants ou descendants, de rapport de vitesse. Le dispositif comprend un module 10 de supervision du régulateur adaptatif de vitesse et/ou de distance du véhicule, conçu pour permettre de réguler la vitesse du véhicule dans une boucle de régulation, notamment en fonction d'une consigne de couple couple_ACC imposée par le régulateur, lorsque ce dernier est activé.

Le dispositif comprend également un module de détection 20 d'un changement de rapport, conçu pour recevoir un signal de position de la pédale d'embrayage et détecter un début de changement de rapport de vitesse montant ou descendant en fonction de ce signal de position. Le module de détection 20 est ainsi prévu pour fournir, en réaction à ladite détection, un signal de détection d'un début de changement de rapport lorsque le conducteur appuie sur la pédale d'embrayage et que le mode de régulation du régulateur adaptatif de vitesse est activé.

L'appui sur la pédale d'embrayage du véhicule est par exemple défini par l'état d'un capteur binaire de position lié à cette pédale. Le signal obtenu par le capteur binaire positionné sur la pédale d'embrayage est un signal indiquant soit l'état embrayé, soit l'état débrayé de la pédale.

Un début de changement de rapport de vitesse est détecté lorsque la régulation de vitesse et/ou de distance est activée et que le signal du capteur de position de la pédale d'embrayage indique un appui sur la pédale d'embraye. Une détection de début de course de la pédale d'embrayage correspondant à un appui sur la pédale d'embrayage permet d'agir au plus tôt. Le signal du capteur de position de la pédale peut être configuré pour indiquer un appui sur la pédale d'embrayage en fonction d'une valeur courante d'enfoncement de la pédale d'embrayage et d'une valeur de seuil prédéterminée pour l'enfoncement de la pédale d'embrayage.

La figure 2 illustre le signal de détection de changement de rapport Gear_Shift fourni par le module de détection 20 en fonction du signal de position de la pédale d'embrayage Sign_Position_Embrayage reçu du capteur de position lié à la pédale d'embrayage. Ainsi, lorsque le signal binaire de position de la pédale d'embrayage passe à l'état « 1 », correspondant à un appui par le conducteur sur la pédale d'embrayage, le signal de détection Gear_Shit passe à l'état Start_of_Gear_Shift représentatif de la détection d'un début de changement de rapport de vitesse, montant ou descendant.

Le module de supervision 10 du régulateur adaptatif vitesse détecte le début d'un changement de rapport dès que le signal de détection Gear_Shit passe à l'état Start_of_Gear_Shift. Il est conçu pour maintenir la régulation pendant le changement de rapport.

Le dispositif comprend également un module 30 de gestion d'estompage de couple conçu pour mettre en œuvre un mécanisme d'estompage de couple, soit une diminution progressive du couple moteur, en réaction à la détection d'un début de changement de rapport de vitesse. L'estompage de couple démarre ainsi dès que le signal de détection Gear_Shit passe à l'état Start_of_Gear_Shift. Conformément à l'invention, à chaque détection d'un changement, montant ou descendant, de rapport, le module 30 de gestion d'estompage de couple donne l'ordre au moteur de réduire le couple transmis pour réduire au maximum les à-coups ; ainsi, les passages de rapport sont rendus plus doux, tout en maintenant la régulation. Pour ce faire, ce contrôle du couple moteur par le module 30 de gestion d'estompage de couple est commandé de façon progressive en fonction d'une valeur minimale de couple C_Min via une première calibration Rate_Limiter_Dec calculée pour filtrer les à-coups. Autrement dit, le module 30 de gestion d'estompage de couple est adapté pour piloter le couple moteur, lorsqu'un début de changement de rapport est détecté et que le régulateur adaptatif de vitesse est activé, de manière à ce que le couple moteur diminue progressivement selon une rampe calibrable Rate_Limiter_Dec, depuis la consigne de couple couple_ACC imposée par le régulateur adaptatif de vitesse jusqu'à atteindre la valeur minimale de couple C_Min, afin de réduire au maximum les à-coups. La rampe calibrable Rate_Limiter_Dec est calculée pour filtrer les à-coups et éviter les envolées de régime moteur. Selon un mode de réalisation, cette rampe calibrable Rate_Limiter_Dec pour l'estompage de couple peut être imposée par la capacité d'accélération maximale du moteur, ce qui permettra de tendre vers une régulation sans à-coups. La rampe calibrable Rate_Limiter_Dec pour l'estompage de couple doit être élevée pour éviter les sursauts de régime. Ainsi, elle est préférentiellement comprise dans une plage de valeurs entre 12000 et 111068 N/s et encore plus préférentiellement comprise entre 15000 et 33000 N/s.

Une fois que le couple moteur du véhicule a été réduit progressivement à la valeur minimale de couple C_Min via la rampe calibrable Rate_Limiter_Dec, on maintient cette valeur de couple minimale pendant la durée du changement de rapport, soit tant que le signal fourni par le capteur de position de la pédale d'embrayage est dans l'état représentatif d'un appui sur la pédale d'embrayage.

Lorsque la fin du changement de rapport est détectée, le module 30 de gestion d'estompage de couple donne l'ordre au moteur d'augmenter le couple moteur pour revenir à la valeur de consigne de couple couple_ACC imposée par le régulateur et dont le calcul a été maintenu par le module 10 de supervision du régulateur pendant la durée du changement de rapport. Pour ce faire, ce contrôle du couple moteur par le module 30 d'estompage de couple est commandé de façon progressive en fonction de la valeur de consigne de couple couple_ACC via une deuxième calibration Rate_Limiter_Inc. Autrement dit, lorsque la fin du changement de rapport est détectée, le module 30 d'estompage de couple est adapté pour piloter le couple moteur, de manière à ce que le couple moteur augmente progressivement selon une deuxième rampe calibrable Rate_Limiter_Inc, depuis la valeur minimale de couple C_Min, jusqu'à se recaler sur la consigne de couple couple_ACC imposée par le régulateur adaptatif de vitesse. Cette deuxième rampe calibrable Rate_Limiter_Inc est préférentiellement comprise dans une plage de valeurs entre 5000 et 20000 N/s et encore plus préférentiellement comprise entre 6000 et 12000 N/s.

La fin du changement de rapport est détectée lorsque l'état embrayé de la pédale, autrement dit un état complètement relâché de la pédale d'embrayage, est indiqué par le signal du capteur de position de la pédale d'embrayage. Ainsi, lorsque le signal binaire de position de la pédale d'embrayage passe à l'état « 0», correspondant à un état embrayé de la pédale d'embrayage, le signal de détection Gear_Shit fourni par le module de détection 20 passe à l'état End_of_Gear_Shift représentatif de la détection de la fin du changement de rapport de vitesse. Le changement de rapport est considéré terminé lorsque l'état embrayé de la pédale est détecté, sans être au point mort, et que le régime moteur, c'est-à-dire sa vitesse de rotation, est stabilisé.

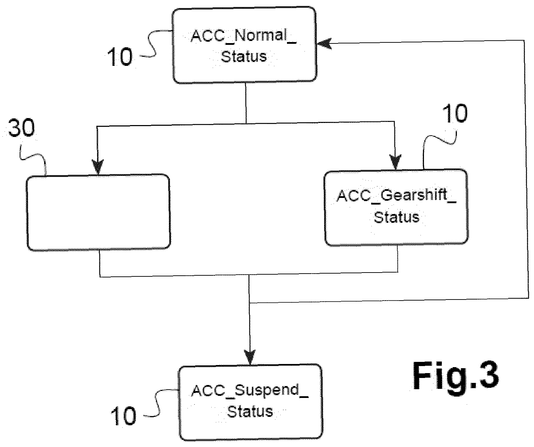

La figure 3 illustre le principe de maintien de la régulation de vitesse et/ou de distance par le module de supervision du régulateur adaptatif de vitesse lors des changements de rapports de vitesse. Le régulateur peut être commuté entre différents états gérés par le module de supervision 10. Le régulateur est initialement dans un état ACC_Normal_Status, correspondant à un état du régulateur dans lequel la régulation de vitesse et/ou de distance est activée. Lorsqu'un changement de rapport de vitesse est détecté, le mécanisme d'estompage de couple est activé par le module 30 d'estompage de couple comme expliqué précédemment et le module 10 de supervision du régulateur commute le régulateur dans un état ACC_Gearshift_Status, correspondant à un état tampon du régulateur dans lequel la régulation est maintenue avec une gestion des changements de rapport au travers de l'estompage de couple.

On prévoit avantageusement que la régulation soit désactivée si le changement de rapport effectué par le conducteur est jugé trop long. Pour ce faire, à l'issue de la détection d'un début de changement de rapport, une temporisation est lancée dans l'attente de la détection de la fin du changement de rapport. En cas de changement de rapport de durée supérieure à un seuil de temporisation prédéterminé, autrement dit si la temporisation atteint le seuil de temporisation prédéterminé avant la détection de la fin du changement de rapport, le module 10 de supervision commute le régulateur dans un état ACC_Suspend_Status correspondant à un état du régulateur dans lequel la régulation de vitesse et/ou de distance est désactivée. Par contre, en cas de détection de la fin d'un changement de rapport, dont la durée est inférieure au seuil de temporisation prédéterminé, le régulateur est remis dans l'état ACC_Normal_Status.

En référence à la figure 1, un module 40 de gestion de la déconnexion du régulateur est conçu pour indiquer au module 10 de supervision du régulateur, par l'intermédiaire d'un signal de déconnexion flag_Deco, que la durée du changement de rapport est supérieure au seuil de temporisation prédéterminé. A la réception de ce signal, le module 10 de supervision est conçu pour déconnecter le régulateur en le passant à l'état ACC_Suspend_Status dans lequel la régulation est désactivée.

Le seuil de temporisation est paramétrable. Il peut être calculé sur la base d'une évaluation de la durée moyenne d'un changement de rapport par les conducteurs. Ce seuil peut être relevé pour prendre en compte le cas d'usage suivant correspondant à l'habitude de certains conducteurs, qui maintiennent la pédale d'embrayage à l'état embrayé et positionnent le levier de vitesse sur le neutre (point mort) pour ralentir ou freiner lors d'un changement de rapport.

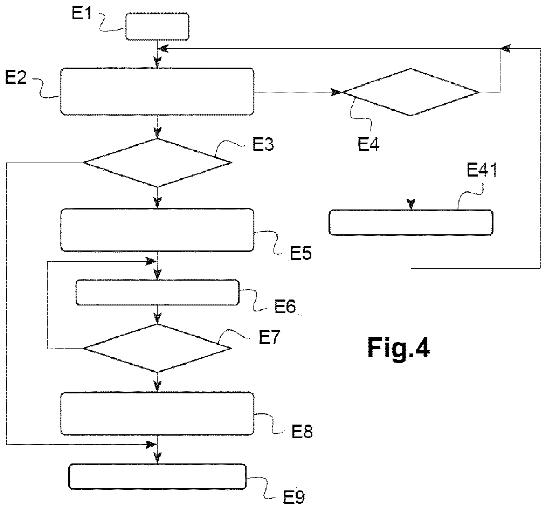

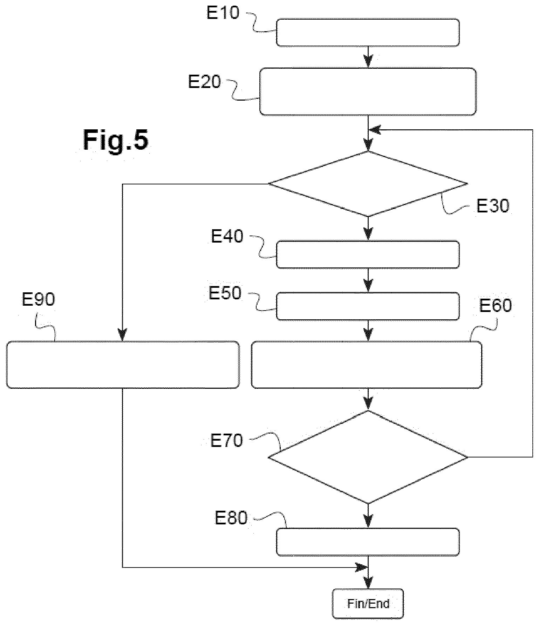

Les figures 4 et 5 illustrent le principe du maintien de la régulation avec mise en œuvre d'un estompage de couple, associé à la possibilité d'envoyer des requêtes de freinage.

Ainsi, le dispositif de la figure 1 met en œuvre un procédé tel qu'illustré à la figure 4 pour gérer la non déconnexion du régulateur lors des changements de rapport avec un estompage de couple.

Le procédé comprend une étape de démarrage E1, dans laquelle le régulateur adaptatif de vitesse et/ou de distance est activé en régulation, c'est-à-dire qu'il est commuté dans l'état ACC_Normal_Status indiqué précédemment. On passe à une étape E2 dans laquelle on calcule des consignes de couple moteur et de freinage, imposées par la régulation. Dans une étape E4, on vérifie s'il est nécessaire d'envoyer des requêtes de freinage au dispositif de freinage du véhicule, par exemple pour réguler la distance par rapport à un véhicule cible. En effet, si un capteur d'un système de régulation de distance est embarqué sur le véhicule, en fonction des données capteur recueillies, il peut être nécessaire de ralentir le véhicule, par exemple parce que le véhicule cible est trop proche. Le capteur du système de régulation de distance peut être une caméra, un LIDAR (« Laser Imaging Détection And Ranging »), un radar, ou encore une combinaison de plusieurs caméra(s)/LIDAR(s)/radar(s). Dans l'étape E4, si la consigne de freinage est différente de zéro, autrement dit si un freinage automatique doit être activé, on passe dans une étape E41, où on envoie la requête de freinage correspondante au système de freinage du véhicule.

La régulation étant toujours activée, dans une étape E3, si on détecte le début d'un changement de rapport, suite à la détection d'un appui sur la pédale d'embrayage comme expliqué précédemment, on passe dans une étape E5, dans laquelle l'estompage de couple est déclenché selon les principes exposés ci-dessus. Ainsi, dans cette étape, le couple moteur est réduit dès lors qu'un début de changement de rapport est détecté. Le couple moteur est réduit progressivement via la rampe de diminution de couple Rate_Limiter_Dec, jusqu'à atteindre la valeur minimale C_Min. Cette valeur de couple est maintenue dans une étape E6 tant que la fin du changement de rapport n'est pas détectée. Lorsqu'on détecte la fin du changement de rapport dans une étape E7, on passe dans une étape E8, dans laquelle le couple moteur se recale progressivement sur la consigne de couple imposé par le régulateur couple_ACC, en suivant la rampe de montée en couple Rate_Limiter_Inc. L'atteinte de cette valeur de consigne de couple marque la fin du mécanisme d'estompage de couple mis en œuvre pendant le changement de rapport.

Par ailleurs, si un changement de la consigne de couple couple_ACC imposée par le régulateur adaptatif de vitesse se produit durant le changement de rapport, le couple moteur s'adaptera à cette nouvelle consigne de couple couple_ACC dès la fin du changement de rapport. Cette montée en couple étant effectuée de manière progressive comme expliqué précédemment, l'adaptation à la nouvelle consigne de couple se fait donc sans à-coups ni envolée de régime du fait que la boucle de régulation reste active durant la phase de changement de rapport.

Si le conducteur appuie sur la pédale de frein durant le changement de rapport, la régulation est suspendue.

Le cas d'une éventuelle déconnexion du régulateur en cas de durée de changement de rapport supérieure au seuil de temporisation prédéterminé va être décrit en référence à la figure 5. Ainsi, le dispositif de la figure 1 peut également mettre en œuvre le procédé tel qu'illustré la figure 5, pour gérer la non déconnexion du régulateur lors des changements de rapport avec un estompage de couple, ainsi qu'une éventuelle déconnexion du régulateur, avec prise en compte des requêtes de freinage. Grâce au maintien de la régulation lors du changement de rapport, le procédé de l'invention permet de prendre en compte dans la boucle de régulation les données capteur issues du système de régulation de distance et d'envoyer une requête de freinage si nécessaire, ce qui permet en plus de la régulation de vitesse, d'assurer la régulation de la distance pendant le changement de rapport par la prise en compte des données capteur.

En référence à la figure 5, le procédé comprend une étape de démarrage E10, dans laquelle le régulateur adaptatif de vitesse et/ou de distance est activé en régulation, c'est-à-dire qu'il est commuté dans l'état Normal_Status indiqué précédemment. On passe à une étape E20, dans laquelle on calcule des consignes de couple moteur et de freinage, imposées par la régulation. Puis, on passe à une étape E30 de détection d'un changement de rapport. Dans l'étape de détection d'un changement de rapport, si un début de changement de rapport est détecté selon les principes exposés plus haut en référence à la figure 2, on passe dans une étape E40 de maintien de la régulation, autrement dit le régulateur est commuté dans l'état ACC_Gearshift_Status indiqué précédemment, et une étape E50 d'estompage de couple est déclenchée. Dans cette étape E50, comme exposé précédemment en référence à la figure 2, dès qu'un début de changement de rapport est détecté, la réduction de couple vers la valeur minimale de couple C_Min se fait progressivement via la première rampe d'estompage Rate_Limiter_Dec. Egalement, la temporisation associée à la durée de changement de rapport est lancée en réaction à la détection du début d'un changement de rapport à l'étape E30. Puis, dans une étape E60, si le capteur du système de régulation de distance envoie des données nécessitant de ralentir le véhicule, ces données sont prises en compte dans la boucle de régulation, toujours active durant la phase en cours de changement de rapport. Aussi, on calcule une requête de freinage en fonction des données capteur reçues et cette requête de freinage est envoyée au système de freinage du véhicule.

Immédiatement après le changement de rapport, le couple moteur revient à la valeur de consigne et ce, sans à-coups, suivant le principe de montée progressive via la deuxième rampe d'estompage Rate_Limiter_Inc.

Dans une étape E70, si la temporisation atteint le seuil de temporisation prédéterminé avant la détection de la fin du changement de rapport, on passe à une étape E80 de déconnexion du régulateur, où la régulation est désactivée. Le régulateur est commuté dans l'état ACC_Suspended_Status, comme indiqué précédemment. Par contre si la fin du changement de rapport est détecté avant l'atteinte du seuil de temporisation, le régulateur est commuté dans l'état Normal_Status et on reboucle sur l'étape E30 de détection de changement de rapport.

Lorsqu'aucun changement de rapport n'est détecté, on passe dans une étape E90, où le couple moteur suit la consigne de couple couple_ACC imposée par le régulateur et le cas échéant, on applique une régulation de la distance grâce aux données capteur reçues, en fonction desquelles une requête de freinage est calculée et envoyée au système de freinage du véhicule.

Le procédé de l'invention est aussi applicable au maintien de la régulation dans le cas où le conducteur effectue un double débrayage pendant le changement de rapport. Le double débrayage est en effet une technique ayant pour but de régler la vitesse de rotation des engrenages de la boîte de vitesse concernés par le rapport de vitesse que l'on s'apprête à engager. Cette technique consiste à lâcher l'accélérateur, débrayer et désengager le rapport en cours, puis, en position point mort, embrayer et accélérer le moteur à la vitesse souhaitée, correspondant à la vitesse de rotation du moteur à laquelle il sera avec le nouveau rapport que l'on s'apprête à engager, puis débrayer à nouveau et engager le nouveau rapport et enfin, embrayer avec le nouveau rapport engagé. Aussi, dans ce contexte de double débrayage, la régulation est maintenue si le conducteur appuie sur la pédale d'accélérateur durant le changement de rapport.

## Revendications

1. Procédé de gestion d'un régulateur adaptatif de vitesse et/ou de distance équipant un véhicule automobile à boîte de vitesse manuelle, dans lequel on active (E1, E10) une régulation de vitesse et/ou de distance en fonction d'au moins une consigne de couple moteur (couple_ACC), **caractérisé en ce que**, en réaction à une détection (E3, E30) d'un début de changement de rapport de vitesse, il comprend les étapes de :
- maintenir (E40) activée ladite régulation de vitesse et/ou de distance,
- commander (E5, E50) une réduction progressive du couple moteur jusqu'à une valeur minimale de couple (C_Min) sur laquelle le couple moteur est fixé pendant le changement de rapport et, dès que la fin du changement de rapport est détectée (E7),
- commander (E8) une augmentation progressive du couple moteur de façon à recaler le couple moteur sur ladite consigne de couple moteur (couple_ACC) maintenue par la régulation.

2. Procédé selon la revendication 1, **caractérisé en ce que** le couple moteur est réduit progressivement selon une première rampe calibrable (Rate_Limiter_Dec).

3. Procédé selon la revendication 1 ou 2, **caractérisé en ce que** le couple moteur est augmenté progressivement selon une deuxième rampe calibrable (rate_Limiter_Inc).

4. Procédé selon l'une quelconque des revendications précédentes, **caractérisé en ce qu'**il comprend une étape de calcul par la régulation d'une nouvelle consigne de couple moteur pendant le changement de rapport, le recalage du couple moteur étant effectué sur cette nouvelle consigne à la fin du changement de rapport.

5. Procédé selon l'une quelconque des revendications précédentes, **caractérisé en ce qu'**il comprend, pendant le changement de rapport, la réception de données capteur issues d'un système de régulation de distance embarqué sur le véhicule, le calcul d'une requête de freinage imposée par ladite régulation en fonction desdites données reçues et la transmission de ladite requête de freinage à un système de freinage du véhicule (E60).

6. Procédé selon l'une quelconque des revendications précédentes, caractérisé en ce l'étape de détection (E3, E30) du début d'un changement de rapport comporte un lancement de temporisation et on commande la désactivation de ladite régulation lorsque la durée du changement de rapport est supérieure à un seuil de temporisation prédéterminé.

7. Procédé selon l'une quelconque des revendications précédentes, **caractérisé en ce qu'**il comprend la réception d'une valeur courante d'enfoncement de la pédale d'embrayage et la détection du début de changement de rapport est effectué en fonction de la valeur courante d'enfoncement de la pédale d'embrayage et d'une valeur de seuil prédéterminée pour l'enfoncement de la pédale d'embrayage.

8. Dispositif de gestion d'un régulateur adaptatif de vitesse et/ou de distance d'un véhicule automobile à boîte de vitesse manuelle, comprenant un module de supervision (10) dudit régulateur adapté à contrôler l'activation d'une régulation de vitesse et/ou de distance du véhicule en fonction d'au moins une consigne de couple moteur (couple_ACC), **caractérisé en ce qu'**il comprend un module de détection (20) d'un changement de rapport de vitesse apte à fournir un signal de détection de changement de rapport (Gear_Shift) et un module de gestion d'estompage (30) de couple configuré pour recevoir ledit signal de détection et, dès que ledit signal de détection passe à un état (Start_of_Gear_Shift) représentatif de la détection d'un début de changement de rapport de vitesse, pour commander une réduction progressive du couple moteur jusqu'à une valeur minimale de couple (C_Min) à laquelle le couple moteur est maintenu pendant le changement de rapport et, dès que ledit signal de détection passe à un état (End_of_Gear_Shift) représentatif de la détection de la fin du changement de rapport de vitesse, pour commander une augmentation progressive du couple moteur de façon à recaler le couple moteur sur ladite consigne de couple moteur (couple_ACC) imposée par la régulation, ledit module de supervision (10) étant configuré pour maintenir l'activation de ladite régulation pendant ledit changement de rapport.

9. Dispositif selon la revendication 8, **caractérisé en ce qu'**il comprend un module de gestion de la déconnexion (40) du régulateur configuré pour lancer une temporisation en réaction à la détection du début de changement de rapport et transmettre un signal de déconnexion (flag_Deco) du régulateur au module de supervision (10) pour commander la désactivation de ladite régulation lorsque la durée du changement de rapport est supérieure à un seuil de temporisation prédéterminé.

10. Véhicule automobile à boîte de vitesse manuelle comprenant un régulateur adaptatif de vitesse et/ou de distance, **caractérisé en ce qu'**il comprend un dispositif de gestion du régulateur selon la revendication 8 ou 9.
